# EUROPEAN PATENT SPECIFICATION

(11) **EP 1 739 129 B1**
(45) Date of publication and mention of the grant of the patent: **22.09.2010**
(21) Application number: 05709808.9
(22) Date of filing: 07.02.2005
(51) Int. Cl.: C08L 33/08, C08K 5/47

(54) **ACRYLIC ELASTOMER COMPOSITION**
ACRYLELASTOMERZUSAMMENSETZUNG
COMPOSITION D'ÉLASTOMÈRE ACRYLIQUE

(30) Priority: 21.04.2004 JP 2004124992; 27.08.2004 JP 2004247666
(43) Date of publication of application: 03.01.2007
(73) Proprietor: Unimatec Co., Ltd., Tokyo 105-8585 (JP)
(72) Inventor: ONO, Hideyuki, c/o Unimatec Co., Ltd., Kitaibaraki-shi, Ibaraki 3191544 (JP); ZENIYA, Kazuhiko, c/o Unimatec Co., Ltd., Kitaibaraki-shi, Ibaraki 3191544 (JP); SHIGENO, Hironobu, c/o Unimatec Co., Ltd., Kitaibaraki-shi, Ibaraki 3191544 (JP)
(74) Representative: HOFFMANN EITLE
(86) International application number: PCT/JP2005/001756
(87) International publication number: WO 2005/103143

(56) References cited:
- EP-A2- 0 943 657
- JP-A- 6 239 940
- JP-A- 11 140 264
- JP-A- 11 269 336
- JP-A- 2001 240 623

## Description

### TECHNICAL FIELD

The present invention relates to an acrylic elastomer composition, and more particularly to an acrylic elastomer composition capable of giving thin-wall, vulcanization-molded articles having distinguished heat resistance and compression set resistance characteristics.

### BACKGROUND ART

Acrylic elastomers generally have distinguished heat resistance and compression set resistance characteristics, but their compression set values will be deteriorated due to oxidative degradation. Particularly, thin-wall vulcanization-molded articles with a small distance from the surface to the central part thereof such as gaskets, O rings, etc. have a strong tendency forwards deterioration of compression set value. It is known that the carboxyl group-containing acrylic elastomers have particularly distinguished compression set resistance characteristics. However, even the deterioration of the compression set values due to oxidative degradation is unavoidable in this case.

To improve the compression set resistance characteristics of the carboxyl group-containing acrylic elastomers, the present applicant has so far proposed a method of using a vulcanizing agent of diamine compound and a vulcanization promoter of 1,8-diazabicyclo[5.4.0] undecene-7 (salt), or 1,5-diazabicyclo [4.3.0] nonene (salt) at the same time, a method of using a mercaptobenzimidazoles, as added to said vulcanization system, at the same time, a method of using a vulcanizing agent of aromatic diamine compound and a vulcanization aid of guanidine compound at the same time, furthermore a method of using a vulcanization promoter of benzothiazolylsulpheneamide-based compound, as added to said vulcanization system, at the same time, etc.
Patent Literature 1 : JP-A-11-80488
Patent Literature 2 : JP-A-11-269336
Patent Literature 3 : JP-A-11-92614
Patent Literature 4 : JP-A-11-140264

Generally, O rings, etc. as vulcanization-molded articles with a small wire diameter, have considerably poor compression set resistance characteristics, as compared with block-shaped (JIS Block) vulcanization-molded articles, because it seems that the thin-wall vulcanization-molded articles with a small wire diameter have a larger surface area than that of the block-shaped vulcanization-molded articles, and thus are liable to fall under strong influence of oxidative deterioration. That is, improvement of the compression set resistance characteristics of thin-wall vulcanization-molded articles cannot be fully attained sometimes only by selection of vulcanization systems as disclosed in the afore-mentioned Patent Literatures.

### DISCLOSURE OF THE INVENTION

### PROBLEM TO BE SOLVED BY THE INVENTION

An object of the present invention is to provide an acrylic elastomer composition capable of giving vulcanization-molded articles with improved compression set resistance characteristics, even if vulcanization-molded products of carboxyl group-containing acrylic elastomer are thin-wall vulcanization-molded ones.

### MEANS FOR SOLVING THE PROBLEM

The object of the present invention can be attained by an acrylic elastomer composition, which comprises a carboxyl group-containing acrylic elastomer and a thiazole-based compound. As a carboxyl group-containing acrylic elastomer, an aliphatic unsaturated dicarboxylic acid monoalkyl ester-copolymerized acrylic elastomer can be preferably used, the carboxyl group-containing acrylic elastomer can be generally vulcanization-molded by a vulcanizing agent of polyvalent amine compound.

### EFFECT OF THE INVENTION

The vulcanization-molded articles obtained from the present acrylic elastomer composition have distinguished heat resistance and compression set resistance characteristics, and an improved durability, even if they are thin-wall vulcanization-molded articles having a small wall thickness or a small wire diameter such as gaskets, O rings, etc., where the thiazole-based compounds seems to act as a secondary antioxidant together with an amine-based or phenol-based primary antioxidant.

### BEST MODES FOR CARRYING OUT THE INVENTION

As a carboxyl group-containing acrylic elastomer, a copolymer of at least one of an alkyl acrylate having an alkyl group of 1-8 carbon atoms and an alkoxyalkyl acrylate having an alkoxyalkyl group of 2-8 carbon atoms with a carboxyl group-containing unsaturated compound can be used.

The alkyl acrylate for use herein includes, for example, methyl acrylate, ethyl acrylate, propyl acrylate, isopropyl acrylate, n-butyl acrylate, n-hexyl acrylate, 2-ethylhexyl acrylate, n-octyl acrylate, and methacrylates corresponding thereto. Generally, the larger the chain length of alkyl group, the more advantageous to the low-temperature resistance, but the more disadvantageous to the oil resistance, whereas the tendency will be reversed when the chain length is smaller. In view of the balance between the oil resistance and the low-temperature resistance, ethyl acrylate and n-butyl acrylate are preferable.

The alkoxyalkyl acrylate for use herein includes, for example, methoxymethyl acrylate, methoxyethyl acrylate, ethoxyethyl acrylate, n-butoxyethyl acrylate, ethoxypropyl acrylate, etc. and 2-methoxyethyl acrylate and 2-ethoxyethyl acrylate are preferable. Alkoxyalkyl acrylate and alkyl acrylate can be also used individually alone, but preferably the former can be used in a proportion of 100 to about 60wt.%, and the latter in a proportion of 0 to about 40wt.%. When alkoxyalkyl acrylate is copolymerized, the balance between the oil resistance and the low-temperature resistance will be better, but when copolymerized in a higher proportion, there will be a tendency to lower the normal state physical properties and the heat resistance.

The carboxyl group-containing unsaturated compound for use herein includes, for example, maleic acid or fumaric acid monoalkyl esters of methyl, ethyl, propyl, isopropyl, n-butyl, isobutyl, etc., and itaconic acid or citraconic acid monoalkyl esters of methyl, ethyl, propyl, isopropyl, n-butyl, isobutyl, etc., and maleic acid mono-n-butyl ester, fumaric acid monoethyl ester, and fumaric acid mono-n-butyl ester are preferable. In addition, an unsaturated carboxylic acid such as acrylic acid, methacrylic acid, etc. can be also used. The carboxyl group-containing unsaturated compound can be used in a copolymerization proportion of about 0.5 to about 10wt.%, preferably about 1 to about 7wt.%, in the carboxyl group-containing acrylic elastomer. In a copolymerization proportion of less than about 0.5wt.%, vulcanization will be unsatisfactory, resulting in deterioration of the compression set values, whereas in a copolymerization proportion of more than about 10wt.%, scorching is liable to occur. The copolymerization reaction is carried out in a conversion of 90% or more, and thus proportions by weight of the individual charged monomers will substantially correspond to proportions by weight of the individual copolymer components in the resulting copolymer.

Other copolymerizable ethylenic unsaturated monomers, for example, styrene, α -methylstyrene, vinyltoluene, vinylnaphthalene, (meth)acrylonitrile, acrylamide, vinyl acetate, cyclohexyl acrylate, benzyl acrylate, 2-hydroxyethyl acrylate, 4-hydroxybutyl acrylate, ethylene, propylene, piperylene, butadiene, isoprene, pentadiene, etc. can be copolymerized in a proportion of not more than about 50% by weight into the carboxyl group-containg acrylic elastomer.

To improve the kneading processability, extrusion processability, etc., polyfunctional (meth)acrylates or oligomers having a glycol residue on the side chain, for example, di(meth)acrylates of alkylene glycol such as ethylene glycol, propylene glycol, 1,4-butanediol, 1,6-hexanediol, 1,9-nonanediol, etc., di(meth)acrylates of neopentyl glycol, tetraethylene glycol, tripropylene glycol, polypropylene glycol, etc., bisphenol A ethylene oxide adduct diacrylate, dimethylol tricyclodecane diacrylate, glycerine methacrylate acrylate, 3-acryloyloxyglycerine monomethacrylate, etc. can be further copolymerized, if necessary.

The carboxyl group-containing acrylic elastomer can be vulcanized generally by a vulcanizing agent of polyvalent amine compound. The polyvalent amine compound includes, for example, aliphatic diamines such as hexamethylenediamine or its carbamate, benzoate, or cinnamaldehyde adduct, diamino-modified siloxane, etc., alicyclic diamines such as 4,4' -methylenebiscyclohexylamine or its cinnamic aldehyde adduct, bis(4-amino-3-methyldicyclohexyl)methane, etc., and aromatic diamines such as 4,4'-methylenedianiline, p,p'-ethylenedianiline, m- or p-phenylenediamine, 3,4' -diaminodiphenyl ether, 4,4' -diaminodiphenyl ether, 4,4' -diaminodiphenyl sulfone, 4,4 ' -(m- or p-phenylenediisopropylidene) dianiline, 2,2-bis[4-(4-aminophenoxy)phenyl]propane, 2,2-bis[4-(3-aminophenoxy)phenyl]propane, bis[4-(4-aminophenoxy)phenyl]sulfone, bis[4-(3-aminophenoxy)phenyl]sulfone, 4,4' -bis(4-aminophenoxy)biphenol, bis[4-(4-aminophenoxy)phenyl]ether, 2,2-bis[4-(4-aminophenoxy)phenyl]hexafluoropropane, 1,4-bis(4-aminophenoxy)benzene, 1,3-bis(4-aminophenoxy)benzene, etc., and aromatic diamines are preferable, and p-substituted aromatic diamines are much preferable. The vulcanizing agent of polyvalent amine compound can be used in a proportion of about 0.1 to about 5 parts by weight, preferably about 0.2 to about 4 parts by weight, on the basis of 100 parts by weight of the carboxyl group-containing acrylic elastomer. In a proportion of less than about 0.1 part by weight, the vulcanization will be unsatisfactory, so no satisfactory compression set resistance characteristics can be obtained..

Together with the vulcanizing agent, it is preferable to use a vulcanization promoter or various other vulcanization promoters to be used together with the vulcanizing agent of polyvalent amine compound.

In addition to an amine-based or phenol-based primary antioxidant, typically 4,4'-bis(α,α-dimethylbenzyl) diphenylamine, 2,2' -methylenebis(4-methyl-6-t-butylphenol), etc. to be used in a proportion of about 0.1 to about 10 parts by weight, preferably about 0.1 to about 5 parts by weight, on the basis of 100 parts by weight of the carboxyl group-containing acrylic elastomer, a thiazole-based compound can be used as a secondary antioxidant, as added to the acrylic elastomer composition comprising the afore-mentioned components.

The thiazole-based compound for use herein includes 2-mercaptobenzothiazole or its zinc salt, or dibenzothiazyl disulfide. The thiazole-based compound can be used in a proportion of about 0.05 to about 10 parts by weight, preferably about 0.1 to about 5 parts by weight, on the basis of 100 parts by weight of the carboxyl group-containing acrylic elastomer. In a proportion of less than about 0.05 parts by weight, no effect can be obtained on the desired improvement of the compression set resistance characteristics, whereas in a proportion of more than about 10 parts by weight, the normal state physical properties will be lowered.

The composition can be prepared by appropriately adding the afore-mentioned components, and a filler such as carbon black, silica, graphite, clay, etc., a plasticizer, a lubricant, a processing aid, etc. thereto, if required, followed by kneading, using an enclosed kneader, rolls, etc., and its vulcanization can be carried out under the ordinary acrylic rubber vulcanization conditions.

### EXAMPLES

The present invention will be described in detail below, referring to Examples.

### EXAMPLE 1

150 parts by weight of water ( "parts by weight" will be hereinafter referred to merely as "parts" ), 5.5 parts of sodium laurylsulfate, and 100 parts of a monomer mixture consisting of 10 parts of ethyl acrylate, 48 parts of n-butyl acrylate, 40 parts of 2-methoxyethyl acrylate, and 2 parts of mono-n-butyl fumarate were charged into a separable flask provided with a tharmometer, a stirrer, a nitrogen gas feed pipe, and a pressure-reducing apparatus, and the oxygen was thoroughly removed from the system by repetition of degassing and nitrogen gas flushing. Then, 0.002 parts of sodium formaldehyde sulfoxylate, and 0.005 parts of t-butyl hydroperoxide were added thereto, thereby starting polymerization reaction at room temperature. The reaction was continued until the polymerization conversion reached 90%. The resulting aqueous latex was precipitated with an aqueous sodium chloride solution, followed by water washing and drying to obtain mono-n-butyl fumarate-copolymerized acrylic elastomer.

To 100 parts of the mono-n-butyl fumarate-copolymerized acrylic elastomer, one part of stearic acid, 2 parts of 4,4'-bis(α,α-dimethylbenzyl) diphenylamine, 55 parts of FEF carbon black, one part of phosphoric acid ester-based processing aid (Phosfanol RL210, a Toho Chemical product), one part of 4,4' -diaminodiphenyl ether vulcanizing agent, 2 parts of di-o-tolylguanidine vulcanization promoter and 0.5 parts of 2-mercaptobenzothiazole were added to prepare a composition. The composition was prepared by kneading the components other than the vulcanizing agent and the vulcanization promoter in a Banbury mixer, and then the vulcanizing agent and the vulcanization promoter were added thereto, followed by kneading through open rolls.

The composition thus prepared was subjected to press vulcanization at 180°C for 8 minutes, and oven vulcanization (secondary vulcanization) at 175°C for 4 hours, and the resulting vulcanization product was subjected to determination of the following items.
Mooney viscosity MLmin and scorch t₅ (125°C) : according to JIS K-6300
Normal state physical properties: according to JIS K-6253 and JIS K-6251
Compression set: according to JIS K-6262
Test pieces blocks, 29mm in diameter and O rings, 5mm in wire diameter were subjected to determination at 150°C for 70 hours, 300 hours and 600 hours, respectively

### EXAMPLE 2

In Example 1, the amount of 2-mercaptobenzothiazole was changed to one part.

### EXAMPLE 3

In Example 1, the amount of 2-mercaptobenzothiazole was changed to 2 parts.

### EXAMPLE 4

In Example 2, the same amount of a zinc salt of 2-mercaptobenzothiazole was used in place of 2-mercaptobenzothiazole.

### EXAMPLE 5

In Example 1, the same amount of dibenzothiazyl disulfide was used in place of 2-mercaptobenzothiazole.

### EXAMPLE 6

In Example 2, the same amount of dibenzothiazyl disulfide was used in place of 2-mercaptobenzothiazole.

### EXAMPLE 7

In Example 3, the same amount of dibenzothiazyl disulfide was used in place of 2-mercaptobenzothiazole.

### EXAMPLE 8

In Example 2, 0.6 parts of hexamethylenediamine carbamate vulcanizing agent was used in place of 4,4' -diaminodiphenyl ether vulcanizing agent.

### COMPARATIVE EXAMPLE 1

In Example 1, no 2-mercaptobenzothiazole was used.

### COMPARATIVE EXAMPLE 2

In Example 8, no 2-mercaptobenzothiazole was used.

Results obtained in the foregoing Examples and Comparative Examples are shown in the following Table.

**Table**

| | | | Example No. | | | | | | | | Comp. Ex. No. | |
|---|---|---|---|---|---|---|---|---|---|---|---|---|
| Items of determination | | | 1 | 2 | 3 | 4 | 5 | 6 | 7 | 8 | 1 | 2 |
| [Mooney viscosity, Scorch] | | | | | | | | | | | | |
| MLmin | | (pts) | 29 | 28 | 27 | 29 | 28 | 28 | 27 | 32 | 28 | 33 |
| t₅ | | (min.) | 5.5 | 5.6 | 5.9 | 5.6 | 5.5 | 5.4 | 5.6 | 3.7 | 5.6 | 3.4 |
| [Normal state physical properties] | | | | | | | | | | | | |
| Hardness | | (Duro A) | 53 | 53 | 53 | 53 | 53 | 53 | 53 | 54 | 53 | 54 |
| 100% Modulus | | (MPa) | 4.3 | 4.1 | 4.2 | 4.3 | 4.2 | 4.3 | 4.4 | 4.9 | 4.2 | 5.4 |
| Tensile strength | | (MPa) | 8.8 | 9.0 | 8.4 | 9.1 | 9.3 | 9.0 | 9.2 | 9.5 | 8.8 | 9.2 |
| Elongation | | (%) | 205 | 215 | 210 | 200 | 205 | 200 | 210 | 230 | 210 | 210 |
| [Compression set] | | | | | | | | | | | | |
| Block | 70 hrs | (%) | 9 | 8 | 8 | 9 | 9 | 8 | 8 | 9 | 9 | 9 |
| | 300 hrs | (%) | 17 | 16 | 15 | 20 | 18 | 16 | 16 | 16 | 18 | 15 |
| | 600 hrs | (%) | 26 | 24 | 23 | 26 | 25 | 24 | 24 | 23 | 25 | 23 |
| O ring | 70 hrs | (%) | 17 | 17 | 16 | 19 | 19 | 17 | 17 | 10 | 18 | 12 |
| | 300 hrs | (%) | 35 | 32 | 30 | 38 | 35 | 33 | 32 | 23 | 38 | 29 |
| | 600 hrs | (%) | 54 | 49 | 46 | 52 | 55 | 50 | 49 | 35 | 60 | 42 |

### INDUSTRIAL UTILITY

The present acrylic elastomer composition can be used as suitable vulcanization molding materials for gaskets, O rings, packings, hoses, etc., and particularly as suitable vulcanization molding materials for thin-wall vulcanization-molded articles having parts in wall thickness of 30mm or less (or a distance of 15mm or less from the central part to the surface of vulcanization-molded articles) such as gaskets having a small wall thickness, for example, engine head cover gaskets, O rings having a small wire diameter, etc.

## Claims

1. An acrylic elastomer composition, which comprises a carboxyl group-containing acrylic elastomer, (A) a vulcanizing agent of polyvalent amine compound, and (B) a thiazole-based compound selected from 2-mercaptobenzothiazole, or its zinc salt, or dibenzothiazyl disulfide.

2. An acrylic elastomer composition according to Claim 1, wherein the carboxyl group-containing acrylic elastomer is an aliphatic unsaturated dicarboxylic acid monoalkyl ester-copolymerized acrylic elastomer.

3. An acrylic elastomer composition according to Claim 1, wherein 0.05-10 parts by weight of the thiazole-based compound is contained on the basis of 100 parts by weight of the carboxyl group-containing acrylic elastomer.

4. An acrylic elastomer composition according to Claim 2, wherein 0.05-10 parts by weight of the thiazole-based compound is contained on the basis of 100 parts by weight of the carboxyl group-containing acrylic elastomer.

5. An acrylic elastomer composition according to Claim 1, wherein the thiazole-based compound is used together with an amine-based or phenol-based antioxidant.

6. An acrylic elastomer composition according to Claim 2, wherein the thiazole-based compound is used together with an amine-based or phenol-based antioxidant.

7. An acrylic elastomer composition according to Claim 1, wherein 0.1-5 parts by weight of a vulcanizing agent of polyvalent amine compound is further contained on the basis of 100 parts by weight of the carboxyl group-containing acrylic elastomer.

8. An acrylic elastomer vulcanization-molded article, vulcanization-molded from an acrylic elastomer composition according to Claim 1.

9. An acrylic elastomer vulcanization-molded article according to Claim 8, which has parts in a wall thickness of not more than 30mm.

10. An acrylic elastomer vulcanization-molded article according to Claim 9, wherein the vulcanization-molded article having parts in a wall thickness of not more than 30mm is a gasket or O ring.

## Patentansprüche

1. Acrylelastomer-Zusammensetzung, die ein carboxylgruppenhaltiges Acrylelastomer, (A) ein Vulkanisationsmittel einer polyvalenten Aminverbindung und (B) eine Thiazol-basierte Verbindung, die aus 2-Mercaptobenzothiazol oder dessen Zinksalz oder Dibenzothiazyldisulfid ausgewählt ist, umfasst.

2. Acrylelastomer-Zusammensetzung gemäss Anspruch 1, wobei das carboxylgruppenhaltige Acrylelastomer ein copolymerisiertes, aliphatisch ungesättigtes Dicarbonsäuremonoalkylester-Acrylelastomer ist.

3. Acrylelastomer-Zusammensetzung gemäss Anspruch 1, die 0,05 bis 10 Gew.-Teile der Thiazol-basierten Verbindung, bezogen auf 100 Gew.-Teile des carboxylgruppenhaltigen Acrylelastomers, enthält.

4. Acrylelastomer-Zusammensetzung gemäss Anspruch 2, die 0,05 bis 10 Gew.-Teile der Thiazol-basierten Verbindung, bezogen auf 100 Gew.-Teile des carboxylgruppenhaltigen Acrylelastomers, enthält.

5. Acrylelastomer-Zusammensetzung gemäss Anspruch 1, wobei die Thiazol-basierte Verbindung zusammen mit einem Amin-basierten oder Phenol-basierten Antioxidationsmittel verwendet wird.

6. Acrylelastomer-Zusammensetzung gemäss Anspruch 2, wobei die Thiazol-basierte Verbindung zusammen mit einem Amin-basierten oder Phenol-basierten Antioxidationsmittel verwendet wird.

7. Acrylelastomer-Zusammensetzung gemäss Anspruch 1, die weiterhin 0,1 bis 5 Gew.-Teile eines Vulkanisationsmittels einer polyvalenten Aminverbindung, bezogen auf 100 Gew.-Teile des carboxylgruppenhaltigen Acrylelastomers, enthält.

8. Vulkanisationsgeformter Acrylelastomerartikel, der aus einer Acrylelastomer-Zusammensetzung gemäss Anspruch 1 vulkanisationsgeformt ist.

9. Vulkanisationsgeformter Acrylelastomerartikel gemäss Anspruch 8, der Teile mit einer Wanddicke von nicht mehr als 30 mm aufweist.

10. Vulkanisationsgeformter Acrylelastomerartikel gemäss Anspruch 9, wobei die Teile des vulkanisationsgeformten Artikels mit einer Wanddicke von nicht mehr als 30 mm eine Dichtung oder eine Rundgummidichtung sind.

## Revendications

1. Composition d'élastomère acrylique, qui comprend un élastomère acrylique contenant un groupe carboxyle, (A) un agent de vulcanisation de composé amine polyvalent, et (B) un composé à base de thiazole choisi parmi le 2-mercaptobenzothiazole, ou son sel de zinc, ou le disulfure de dibenzothiazyle.

2. Composition d'élastomère acrylique selon la revendication 1, dans laquelle l'élastomère acrylique contenant un groupe carboxyle est un élastomère acrylique copolymérisé avec un ester monoalkylique d'acide dicarboxylique insaturé aliphatique.

3. Composition d'élastomère acrylique selon la revendication 1, dans laquelle 0,05 à 10 parties en poids du composé à base de thiazole est contenu sur la base de 100 parties en poids de l'élastomère acrylique contenant un groupe carboxyle.

4. Composition d'élastomère acrylique selon la revendication 2, dans laquelle 0,05 à 10 parties en poids du composé à base de thiazole est contenu sur la base de 100 parties en poids de l'élastomère acrylique contenant un groupe carboxyle.

5. Composition d'élastomère acrylique selon la revendication 1, dans laquelle le composé à base de thiazole est utilisé conjointement à un antioxydant à base d'amine ou à base de phénol.

6. Composition d'élastomère acrylique selon la revendication 2, dans laquelle le composé à base de thiazole est utilisé conjointement à un antioxydant à base d'amine ou à base de phénol.

7. Composition d'élastomère acrylique selon la revendication 1, dans laquelle 0,1 à 5 parties en poids d'un agent de vulcanisation de composé amine polyvalent est en outre contenu sur la base de 100 parties en poids de l'élastomère acrylique contenant un groupe carboxyle.

8. Article moulé par vulcanisation d'un élastomère acrylique, moulé par vulcanisation à partir d'une composition d'élastomère acrylique selon la revendication 1.

9. Article moulé par vulcanisation d'un élastomère acrylique selon la revendication 8, qui possède des parties dans une épaisseur de paroi de pas plus de 30 mm.

10. Article moulé par vulcanisation d'un élastomère acrylique selon la revendication 9, dans lequel l'article moulé par vulcanisation possédant des parties dans une épaisseur de paroi de pas plus de 30 mm est un joint ou un joint torique.
